# EUROPEAN PATENT APPLICATION

(11) **EP 0 528 093 A1**
(43) Date of publication of application: **24.02.1993**
(21) Application number: 91610064.7
(22) Date of filing: 16.08.1991
(51) Int. Cl.: B29B 17/00, B29B 13/02, B29B 9/06, B29K 25/00

(54) **Method and apparatus for producing pelleted polystyrene of polystyrene foam plastic materials**

(71) Applicant: Remac Maskinfabrik ApS, DK-5290 Marslev (DK)
(72) Inventor: Hansen, Bjarne, DK 5540 Ullerslev (DK); Elmlund, Anton, DK 4220 Korsor (DK)
(74) Representative: Larsen, Hans Ole

(57) **Abstract**

By means of the method according to the invention, it is possible to re-use polystyrene plastic foam items (1), such as gases and the like, by comminuting the items and thereafter heating the comminuted material in a vessel (11) until it melts at a temperature of between 200-230°C, after which the melted material is fed to a heating vessel (32) from which it is conveyed to a stringing tool (40) by means of a worm conveyor (38) for stringing-out (45) of polystyrene strings.

These polystyrene strings can be pelleted so that the polystyrene can constitute a raw material in a new production, or possibly be mixed with a new material.

By means of the invention, it is possible to re-use polystyrene plastic foam and produce polystyrene at a price which is competitive with the raw material polystyrene, which promotes re-use of the used items and reduces the pollution by such items.

## Description

The invention relates to a method for the production of polystyrene in pellet form on the basis of styrene plastic foam items, such as used packaging and the like, so that it can be re-used either alone or mixed for the production of polystyrene items, said method comprising a comminution of the plastic foam items in a grinder or the like, followed by possible washing and drying of the comminuted material before it is conveyed to an intermediate store, and also a plant for the execution of the method.

The use of polystyrene plastic foam items is strongly increasing because of the good characteristics of this material.

It is robust and rigid and moreover provides good protection against shock, impact and dropping to the ground by the relatively thick surface layer. Furthermore, it has good heat insulation properties due to the inner cell structure.

Items of this material can be produced in large blocks or sheets, and as moulded items such as those used for packaging.

The items are produced from polystyrene as the only or the main raw material, which is foamed-up in a mould by means of steam and a driving agent.

The large consumption of such plastic foam items gives rise to a considerable waste problem. Consequently, there is a great need for the re-use of the foam plastic, but the possibilities are limited.

A material for re-use can, however, be produced in a relatively simple manner, namely granulated foam plastic, which is comminuted in a grinder. This granulate can be used as filling for insulation, packaging and similar technical applications. However, the quality and herewith the value of this granulate is not uniform, and the costs in connection with collection, processing and distribution are often greater than the market price for such a granulate.

Therefore, attempts have been made to convert the expanded polystyrene to polystyrene. These attempts include a comminution of the plastic foam, mainly by a cutting process, where simultaneously with the cutting there occurs a heating of the swarf due to the frictional heat developed by the cutting blades.

The cut-up material is hereafter conveyed to an extruder, where it is compressed into melting consistency and led out through an extruding head for the formation of polystyrene strings, which are hereafter pelletted for re-use in a commmonly-known manner.

However, this method has proved to be particularly uneconomic, the reason being that it requires considerable compression work to compress the material for melting consistency. This is because the comminuted material has a low density due to the high cell count. The capacity hereby becomes so low that the efficiency of the extruder becomes so low that the re-use exceeds the market price of the polystyrene raw material.

### Advantages of the invention.

The method according to the invention is one by which the comminuted material is conveyed to a vessel in which it is heated until it melts, after which it is pumped through a filter to a heating vessel from which it is conveyed to a tool for the stringing and pelleting.

It thus becomes possible to form the strings entirely without the need of an extruder.

This is achieved with the help of surprisingly simple means, namely melting-down and the maintaining of the material in molten condition up to the stringing tool.

At an early point in the process, the material is hereby brought into a form which makes it suitable for direct stringing by means of simple pump and transport means, which are not only economically advantageous to install but also to operate for reasons of the process's high degree of binding.

It is hereby possible to produce a reusable polystyrene in pellet form which can immediately be used in new products or form part of a mixture with new material, and which at its low production cost and high market value can cover the costs of collection of plastic foam items and the processing of these for re-use, while at the same time the raw material for a new production of polystyrene items is herewith made cheaper.

The method according to the invention thus results in a hitherto unattainable step towards a financially profitable re-use of plastic foam items as polystyrene raw material, which solves the problem of waste in a manner beneficial to the environment.

As disclosed in claim 2, by melting-down and maintaining the molten material at temperatures most expedient for the method, the lowest possible cost and therewith production price of the re-usable polystyrene is ensured.

As disclosed in claim 3, the use of a worm conveyor for the last transport towards the tool ensures a suitably uniform delivery of homogenous material to the nozzle head.

As disclosed in claim 4, the mounting of electrical heating elements in and around the individual machine parts ensures the best possible temperature at the lowest possible operational costs.

As disclosed in claim 5, the building-in of non-return valves in the process line safeguards the flow of material against reflux, hereby avoiding a non-homogeneous flow of the molten material.

Finally, as disclosed in claim 6, it is expedient to use a stringing tool with a number of adjacent nozzle openings which are oriented in a uniform manner in relation to the delivery flow of molten material.

### The drawing

An example of an embodiment according to the invention will now be described in closer detail with reference to the drawing, where
- fig. 1: shows a plant in schematic form,
- fig. 2: shows a part of the plant comprising melting vessel, heating vessel and stringing tool,
- fig. 3: shows a section through the coarse filter and the non-return valve seen in the direction III-III in fig. 2,
- fig. 4: shows the non-return valve seen in the direction IV-IV in fig. 3,
- fig. 5: shows a section through the fine filter seen in the direction V-V in fig. 2,
- fig. 6: shows a section through the stringing tool seen in the direction VI-VI in fig. 2,
- fig. 7: shows an enlarged cross-section through a nozzle opening seen in the direction VII-VII in fig. 6,
- fig. 8: shows the melting vessel seen from above,
- fig. 9: shows a part-section through the melting vessel,
- fig. 10: shows the melting vessel seen from below, and
- fig. 11: shows the positioning of the heating elements on the filters, the heating vessel, the worm conveyor and the stringing tool.

### Description of the example embodiment:

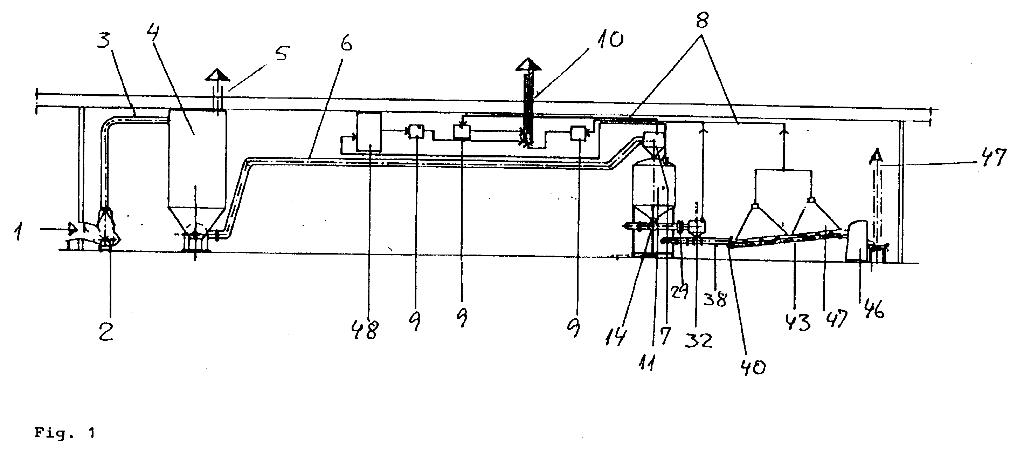

An example of the execution of the method is shown in fig. 1.

The plant comprises a receiving station for the polystyrene plastic foam items 1 which, as indicated by the arrow, are fed into a grinder 2 where they are comminuted into small pieces to give them a form in which they can be transported through the plant, and which does not fill more space than necessary.

After this comminution, the material can be sorted for impurities, either in a commonly-know separator and/or by washing and subsequent drying. Such cleaning can be necessary when the items contain elements which may be injurious for the plant or the re-use, or which reduce the effectivity of the subsequent comminution and stringing out in the plant.

The comminuted material is conveyed via a channel 3 to a silo 4 which serves as an intermediate store.

The silo is provided with a ventilation channel 5 and, at the bottom, with a commonly-known control arrangement, for example a blower or other conveyor, for the further transport of the comminuted material via a channel 6 to a separator, preferably in the form of a cyclone 7.

The gases mixed with and/or suspended in the air are led via an exhaust channel 8 through a carbon filter 9 to an outlet channel 10 and out to the surroundings.

The solid constituents of the comminuted material from the cyclone 7 are then led via a channel 18 down into a melting vessel 11, which will be described in more detail with reference to figs. 2, 8, 9 and 10.

In fig. 2 the melting vessel 2 is seen from the outside, and it will be seen how the cyclone 7 is mounted directly on the closed upper cover of the vessel. Through this cover there extends a stub for the exhaust channel 8 which, as indicated in fig. 1, leads to the outlet channel 10 via a dust filter 48.

In fig. 2 is also seen a hatch 12 for inspection and cleaning of the inside of the vessel.

A pair of level sensors 13 extend through the upper cover for the regulation of the supply to the vessel.

The funnel-shaped bottom 20 of the vessel 11 is connected lowermost to a stub 22 with a flange to which a filter 14 is mounted.

The vessel is provided with an insulated jacket as shown in figs. 8 and 9, under which jacket electrical heating elements 16 extend around the side. Through the upper cover there are inserted a number of electrical heating rods 17 which, as indicated in fig. 8, are evenly distributed in the interior of the vessel. These heating rods 17 have connection pipes 19 which extend up through the cover.

In the bottom 20 of the vessel 11 there is also provided a number of heating elements 21 which, as indicated in fig. 10, extend from the outside and in towards the outlet channel 22 for the vessel 11.

In this channel 22 there can be mounted a shut-off valve in the form of a slide-valve 23 or the like.

The channel 22 opens out into a filter 14 which is shown in section in fig. 3. The filter element 24 is inclined so that it slopes in the direction of flow. The element can be cleaned as required through an openable hatch or cover 49 in the valve housing.

The material melts when it is heated in the vessel 11. This requires a temperature of around 200-230°C, which is achieved by means of the electrical heating elements 16, 17 and 21 in and around the vessel 11, and heating elements in the form of a jacket 25, see fig. 9, which surrounds the filter 14.

The heating elements ensure a rapid melting-down of the material, which they maintain at a viscosity suitable for the further flow of material through the plant.

For this purpose there is used a pump 26, see figs. 2 and 11, which can be a piston pump or a rotary pump, in that said pump 26 presses the melted material through the filter element 24 and a subsequent non-return valve 27 which, as shown in fig. 3, can be a spring-loaded ball valve. This non-return valve safeguards against reflux and gives rise to an effective suction from the vessel and pumping through the filter 14.

Through a channel 28, the melted and filtered material is pumped through a further filter 29 which, as shown in fig. 5, can be a commonly-known automatic filter. Since this is a finer filter, it requires more frequent cleaning and replacement, which can be effected via an actuator 31 which changes the filter elements 30 as required.

A non-return valve 27 can also be mounted in the direction of flow after the fine filter 29.

Hereafter, the channel 28 leads to a heating vessel 32.

As shown in fig. 11, heating jackets 35 are provided around the channel 28, the fine filter 29 and the non-return valve 27.

As shown in fig. 2, the heating vessel 32 is provided with a level control 33 in the form of a float 34 with a pulse generator which can activate a pair of contacts for the upper and the lower levels of melted material in the vessel.

The object of the vessel 32 is to ensure a suitable store of melted material for the subsequent stringing process.

The vessel is connected to an exhaust channel 8. Finally, electrical heating bands 36 are mounted around the sides and the bottom of the vessel 32.

From the heating vessel 32, the melted material is conveyed through an outlet 37 to a conveyor arrangement which, as seen in figs. 2 and 11, is preferably a worm conveyor 38 which is driven by a motor 39. This conveyor arrangement feeds the melted material forward to a stringing tool, as shown in figs. 6 and 7.

This tool comprises a nozzle head 40 with a number of nozzle openings 41 which are shown on an enlarged scale in fig. 7.

All of the nozzle openings 41 extend at right angles to the nozzle head, which results in the best flow of melted material out through the openings when the material is pressed through them, in that the material will then be strung out.

To ensure the best condition of the melted material, an additional heating element in the form of a jacket 42 is mounted around the stringing tool.

The temperature of the melted material through the channel 28, the heating vessel 32 and the conveyor 38 is lower or around 200°C. The heat supply can be slightly higher around the stringing tool in order to ensure an advantageous stringing-out, the temperature of which can be a little higher.

Under the stringing tool 40 there is placed a belt conveyor 43 on which the strung-out polystyrene strings, as indicated by the arrow 45, can be conveyed further.

As indicated in fig. 1, exhaust hoods 44 can be suspended above the conveyor belt 43, said hoods being connected to the exhaust channel 8. Moreover, for the quick cooling of the polystyrene strings 45, jets (not shown) can be employed for the spray-cooling of the strings on the conveyor belt. The cooling can also be effected by allowing the strings to pass through a cooling bath.

The conveyor belt 43 carries the styrene strings 45 to a commonly-known pelleting tool 46, from which the pelleted polystyrene can be sifted and possibly vacuum-cleaned for the removal of dust before the regenerated polystyrene 47 can leave the plant for re-use in a new production.

The efficiency of the plant is high because of the effective melting-down and short production time through the plant from when the polystyrene plastic foam is introduced until the pelleting of the polystyrene granulate is completed.

Furthermore, the consumption of energy for the transport and pumping through the plant is remarkably low, partly because of the expedient viscosity brought about by the melting, and partly because of the suitability of the melted material for pressing out through the nozzle head.

## Claims

1. Method for the production of polystyrene in pellet form on the basis of polystyrene plastic foam items such as used packaging and the like, so that it can be re-used either alone or mixed for the production of polystyrene items, said method comprising a comminution of the plastic foam items in a grinder or the like, followed by possible washing and drying of the comminuted material before it is conveyed to an intermediate store, **characterized** in that the comminuted material is conveyed to a vessel (11) in which it is heated until it melts, after which it is pumped through a filter (14, 29) to a heating vessel (32) from which it is conveyed to a tool (40) for stringing-out and pelleting.

2. Method according to claim 1, **characterized** in that the temperature in the melting vessel (11) is held at around 200-230°C, while the subsequent filtration, transport and stringing-out is effected at a temperature which can be lower.

3. Method according to claims 1 and 2, **characterized** in that the melted material from the heating vessel (32) is fed to the stringing tool by means of a conveyor (38), preferably a worm conveyor.

4. Plant for the execution of the method according to claims 1-3, **characterized** in that the melting vessel (11) is provided with electrical heating elements (16, 17, 21) both inside the vessel and around the side and the bottom, that the heating vessel (32) is provided with heating elements (36) around the side and the bottom, while the filter (14, 29), the connection pipes (28), the conveyor (38) and the stringing tool (40) are surrounded by heating elements (25, 35, 38) of the jacket type.

5. Plant according to claim 4, **characterized** in that the filter comprises a coarse filter (14) and a fine filter (29) which, on their outlet side, are provided with a non-return valve (27).

6. Plant according to claims 4 and 5, **characterized** in that the stringing tool (40) is configured with a number of nozzle openings (41) with mutually parallel centre axes.
